(19) Europäisches Patentamt
European Patent Office
Office européen des brevets

(11) **EP 4 223 396 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **22154674.0**

(22) Anmeldetag: **02.02.2022**

(51) Internationale Patentklassifikation (IPC):
**B01D 67/00** (2006.01)   **B01D 53/22** (2006.01)
**B01D 69/02** (2006.01)   **B01D 69/10** (2006.01)
**B01D 71/02** (2006.01)   **B01D 71/80** (2006.01)

(52) Gemeinsame Patentklassifikation (CPC):
**B01D 69/02; B01D 67/0016; B01D 67/0018; B01D 69/105; B01D 71/021; B01D 71/80;** B01D 53/228; B01D 71/52; B01D 71/60; B01D 2323/08; B01D 2325/20

(54) **VERFAHREN ZUM HERSTELLEN EINER MEMBRAN**

MEMBRANE, METHOD FOR MANUFACTURING A MEMBRANE

PROCÉDÉ DE FABRICATION D'UNE MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.08.2023   Patentblatt 2023/32**

(73) Patentinhaber: **Helmholtz-Zentrum hereon GmbH**
**21502 Geesthacht (DE)**

(72) Erfinder:
• **Weigelt, Fynn**
**20259 Hamburg (DE)**
• **Shishatskiy, Dr. Sergey**
**21502 Geesthacht (DE)**
• **Brinkmann, Dr. Torsten**
**21502 Geesthacht (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
US-A- 4 963 165     US-A1- 2008 202 262
US-A1- 2013 287 958     US-A1- 2019 002 836
US-A1- 2021 039 052

• ZHAO DAN ET AL: "Improved CO2separation performance of composite membrane with the aids of low-temperature plasma treatment", JOURNAL OF MEMBRANE SCIENCE, ELSEVIER BV, NL, Bd. 570, 19. Oktober 2018 (2018-10-19), Seiten 184-193, XP085536298, ISSN: 0376-7388, DOI: 10.1016/J.MEMSCI.2018.10.051
• ESPOSITO ELISA ET AL: "Pebax /PAN hollow fiber membranes for CO2/CH4separation", CHEMICAL ENGINEERING AND PROCESSING: PROCESS INTENSIFICATION, ELSEVIER SEQUOIA, LAUSANNE, CH, Bd. 94, 18. März 2015 (2015-03-18), Seiten 53-61, XP029258010, ISSN: 0255-2701, DOI: 10.1016/J.CEP.2015.03.016
• PORTELA RAQUEL ET AL: "Monolithic SiC supports with tailored hierarchical porosity for molecularly selective membranes and supported liquid-phase catalysis", CATALYSIS TODAY, Bd. 383, 1. Januar 2022 (2022-01-01), Seiten 44-54, XP055941476, AMSTERDAM, NL ISSN: 0920-5861, DOI: 10.1016/j.cattod.2020.06.045

**Beschreibung**

Die vorliegende Erfindung betrifft ein Verfahren zum Herstellen einer Gastrennmembran, wobei die Membran einen anorganischen porösen Träger und eine darauf applizierte selektive Trennschicht umfasst.

Die Erfindung wird in den beigefügten Patentansprüchen definiert. Bevorzugte Aspekte der vorliegenden Erfindung ergeben sich überdies aus der nachfolgenden Beschreibung einschließlich der Beispiele.

Soweit für einen erfindungsgemäßen Aspekt bestimmte Ausgestaltungen als bevorzugt bezeichnet werden, gelten die entsprechenden Ausführungen jeweils auch für die anderen Aspekte der vorliegenden Erfindung, *mutatis mutandis.* Bevorzugte individuelle Merkmale erfindungsgemäßer Aspekte (wie in den Ansprüchen definiert und/oder in der Beschreibung offenbart) sind miteinander kombinierbar und werden vorzugsweise miteinander kombiniert, sofern sich im Einzelfall für den Fachmann aus dem vorliegenden Text nichts anderes ergibt.

Verfahren zum Herstellen von Membranen sind bereits aus dem Stand der Technik bekannt. Insbesondere bei der Herstellung von Gastrennmembranen zur Trennung von Gas- und Dampfgemischen werden hohe Ansprüche an die Membraneigenschaften gestellt. Dies gilt insbesondere dann, wenn die Gastrennmembran in einem Membranreaktor verwendet wird. Hier ist es zum einen erstrebenswert Membranen einzusetzen, die eine hohe Gastrennleistung (Selektivität) aufweisen; diese Eigenschaft wird im Wesentlichen durch das Material der selektiven Trennschicht bestimmt. Für die technische Verwertbarkeit ist es zudem unabdingbar, hohe Gasströme pro Fläche zu erreichen (auch als Fluss oder Gasfluss bezeichnet bzw., wenn zusätzlich auf die Triebkraft bezogen, als Permeanz bezeichnet), um die Membranflächen und die Energiekosten gering zu halten.

Proportional zur steigenden Schichtdicke der Trennschicht fällt der Gasfluss, es ist also entscheidend geeignete Materialien zu wählen und diese in möglichst kleinen Schichtdicken herzustellen. Der Fachmann ist daher stets bestrebt, eine möglichst dünne selektive Trennschicht zu applizieren, um nachteilige Effekte in Bezug auf die Permeanz zu minimieren.

Da insbesondere in Membranreaktoren häufig hohe Temperaturen und hohe Drücke eingesetzt werden, um die gewünschte Reaktion durchzuführen, müssen die Membranen auch eine gute mechanische und thermische Beständigkeit aufweisen. Es hat sich gezeigt, dass der Einsatz von reinen Polymermembranen - wie zum Beispiel im Dokument "Entwicklung von Polymermembranen für die Abtrennung von Kohlendioxid aus Gasströmen" von Ballhorn (Dissertation, 2001, Rheinisch-Westfälische Technische Hochschule Aachen) oder im Dokument US4963165A offenbart - in Membranreaktoren ineffizient ist, da reine Polymermembranen den thermischen und mechanischen Belastungen nicht standhalten können. Technisch eingesetzte Membranen für die Gastrennung sind deshalb in der Regel Kompositmembranen (auch asymmetrische Membranen genannt), die aus einer porösen Unterstruktur als Stützstruktur und einem darauf befindlichen dichten Polymerfilm bestehen, wobei der der dichte Polymerfilm die Gastrennaufgaben übernimmt. Die Unterstruktur kann sowohl aus einem Polymer als auch aus einem anorganischen Werkstoff bestehen.

Es besteht somit ein großer Bedarf an effizienten Verfahren zur Herstellung von Gastrennmembranen, welche aus einer anorganischen porösen Trägerstruktur und einer darauf applizierten dichten und möglichst dünnen selektiven Trennschicht bestehen. Um poröse Materialien mit einer dichten selektiven Trennschicht zu beschichten, können unterschiedliche Verfahren verwendet werden. Beispiele für solche Verfahren sind Aufbringen durch Gie-ßen, Tauchbeschichtung (Dip Coating) oder Rollenbeschichtung. Hierzu verweisen wir auf folgende Dokumente:

-    "Continuous gas-phase hydroformylation of but-1-ene in a membrane reactor by supported liquidphase (SLP) catalysis" von Logemann et al. (veröffentlicht in Green Chem., 2020, 22, 5691-5700),

-    "Monolithic SiC supports with tailored hierarchical porosity for molecularly selective membranes and supported liquid-phase catalysis" von Portela et al. (Catalysis Today, Bd. 383, 1. Januar 2022, Seiten 44-54),

-    "Gas Separation Properties of Polyimide Thin Films on Ceramic Supports for High Temperature Applications" von Escorihuela et al. (Membranes 2018, 8, 16),

-    WO 2009/156065 A1,

-    US 2013/287958 A1,

-    "Improved CO2 separation performance of composite membrane with the aids of low-temperature plasma treatment" von Zhao et al. (Journal of Membrane Science, Bd. 570, 19. Oktober 2018, Seiten 184-193),

-    "Pebax®/PAN hollow fiber membranes for CO2/CH4 separation" von Esposito et al. (Chemical Engineering and Processing: Process Intensification, Bd. 94, 18. März 2015, Seiten 53-61),

- US 2008/202262 A1,

- US 2021 /039052 A1.

US 2019/002836 A1 offenbart die additive Abscheidung einer Bio-Tinte auf ein auf etwa 4 °C temperiertes Substrat, so dass die abgeschiedene Tinte sofort erstarrt; jedoch im Kontext der Biotechnologie bzw. im Kontext künstlicher Hautmaterialien.

In der Praxis gestaltet sich das Beschichten von anorganischen porösen Trägern mit einer dünnen selektiven Trennschicht schwierig. Die Ausbildung und die Beschaffenheit der gebildeten selektiven Trennschicht ist insbesondere abhängig von der Eigenschaft des verwendeten anorganischen porösen Trägers, zum Beispiel von der Oberflächenstruktur, der Porengröße, dem Material oder der Vorbehandlung des Materials. Die anorganischen porösen Träger weisen häufig Partikel mit scharfen Kanten an der Oberfläche auf, welche die Bildung einer dichten und gleichzeitig dünnen Polymerschicht behindern und zu unerwünschten Defekten führen. Des Weiteren führt die Dicke der porösen Stützstruktur zu Kapillarkräften, welche Lösungsmittel und die darin enthaltenen Polymere in die Porenstruktur hineinziehen; dies führt dann zur ungewünschten Ausbildung einer besonders dicken Polymerschicht mit Nachteilen in Bezug auf die Permeanz. Weist der anorganische poröse Träger große Poren auf (insbesondere Meso- und Makroporen mit Porendurchmessern von größer als 50 nm), kommt es häufig zu einer Infiltration der Polymerlösung in die Poren des Trägermaterials, was wiederum zu unerwünschten Defekten in der resultierenden Polymerschicht führt. Zudem gilt es, eine Infiltration des Porensystems generell zu vermeiden, da offene Poren bzw. Porenkanäle des Trägermaterials entscheidend sind für einen effizienten Gastransport.

Bestehende Verfahren aus dem Stand der Technik bedienen sich im Wesentlichen zweier Strategien, um eine solche Poreninfiltration zu vermeiden. Eine erste Strategie besteht darin, die in der Polymerlösung enthaltenen Polymere vorzuvernetzen, um somit die Viskosität der Polymerlösung zu erhöhen. Diese Strategie lässt sich jedoch nicht auf jede Polymerlösung und jeden Polymertypen anwenden und ist somit stark beschränkt. Eine zweite Möglichkeit besteht darin, die Konzentration des Polymers oder der Polymere in der Lösung zu erhöhen, was ebenfalls zu einer Erhöhung der Viskosität führt. Die Abscheidung der Polymere aus solchen hochviskosen Lösung führt jedoch zu einer hohen Schichtdicke des Polymerfilms, d.h. zu einer unerwünscht dicken selektiven Trennschicht, auf dem anorganischen porösen Träger.

Es war somit eine primäre Aufgabe der vorliegenden Erfindung, die oben genannten Nachteile der aus dem Stand der Technik bekannten Verfahren zu überwinden und ein einfaches und effektives Verfahren bereitzustellen, um Gastrennmembranen, umfassend einen anorganischen porösen Träger und eine darauf applizierte dünne und dichte selektive Trennschicht, herzustellen. Das Herstellungsverfahren hat dabei zur Zielsetzung, dass durch die erfindungsgemäße Auswahl der Verfahrensschritte (dichte) Gastrennmembranen resultieren, die sich durch eine hohe Permeanz und Selektivität auszeichnen und zudem thermischen und mechanischen Belastungen standhalten können. Das Verfahren soll zudem dazu geeignet sein, auch anorganische poröse Träger mit einem Porensystem mit durchschnittlichen Porendurchmessern von größer als 50 nm zu beschichten und hierbei eine Poreninfiltration des Beschichtungsmaterials zu verhindern.

Weitere Aufgaben ergeben sich aus der nachfolgenden Beschreibung und den Patentansprüchen.

Die primäre Aufgabe der vorliegenden Erfindung wird gelöst durch ein Verfahren zum Herstellen einer Gastrennmembran, wie es im beigefügten Patentanspruch 1 und in der nachfolgenden

Beschreibung definiert ist. Die Aufgabe wird somit gelöst durch ein Verfahren zum Herstellen einer Gastrennmembran, wobei die Gastrennmembran einen anorganischen porösen Träger und eine darauf applizierte selektive Trennschicht umfasst,

umfassend zumindest die folgenden Schritte:

a) Herstellen oder Bereitstellen einer durch Abkühlen physikalisch gelierbaren Polymerlösung (P) umfassend Polyether-Polyamid-Block-Copolymer in einem Lösungsmittel,

b) Kontaktieren der in Schritt a) hergestellten oder bereitgestellten Polymerlösung (P) mit einem gekühlten anorganischen porösen Träger (T), so dass die Polymerlösung (P) abkühlt und unter Ausbildung einer Polymergelschicht an der Oberfläche des anorganischen porösen Trägers (T) physikalisch geliert, wobei vorzugsweise unmittelbar vor dem Kontaktieren in Schritt b) die Temperatur $T_T$ des gekühlten anorganischen porösen Trägers (T) mindestens 5 °C unterhalb der Temperatur liegt, bei welcher die Polymerlösung (P) physikalisch zu gelieren beginnt,

c) Trocknen der Polymergelschicht auf dem anorganischen porösen Träger (T) unter Ausbildung einer selektiven Trennschicht, so dass die Gastrennmembran resultiert.

Die Erfindung basiert auf einer ganzen Reihe ineinandergreifender Überlegungen, die insgesamt dazu führen, dass die vorstehend geschilderten Schwierigkeiten überwunden werden konnten.

Die Erfinder haben zunächst erkannt, dass die zugrundeliegende Aufgabe, d.h. die Applikation einer (möglichst dünnen und dichten) selektiven Trennschicht auf die Oberfläche eines anorganischen porösen Trägers, durch die Ausbildung einer Polymergelschicht an der Oberfläche des anorganischen porösen Trägers erreicht werden kann. Dies ist insbesondere deshalb überraschend, da eine Gelbildung bislang als nachteilig für das Erreichen einer möglichst dünnen selektiven Trennschicht angesehen wurde. Auf Basis der bisherigen Erkenntnisse auf vorliegendem technischen Gebiet wäre der Fachmann daher eher dazu veranlasst gewesen, zum Erreichen einer möglichst dünnen selektiven Trennschicht die Ausbildung einer Polymergelschicht zu vermeiden. Der von den Erfindern verfolgte Lösungsansatz richtet sich daher gegen die Intuition des Fachmanns.

Der Begriff "durch Abkühlen physikalisch gelierbare Polymerlösung" in Schritt a) des erfindungsgemäßen Verfahrens bezeichnet eine Polymerlösung umfassend in einem Lösungsmittel gelöstes Polyether-Polyamid-Block-Copolymer, wobei das Polymer dazu in der Lage ist, unterhalb einer sogenannten Geltemperatur ein physikalisches Gel bzw. eine physikalische Gelschicht auszubilden.

Die Gelbildung, das Gelieren oder die Ausbildung einer Gelschicht sind Synonyme und bezeichnen im Rahmen der vorliegenden Erfindung einen physikalischen Prozess (was auch durch Verwendung der Begriffe "physikalisch gelierbar" und "physikalisch geliert" verdeutlicht wird), welcher auf intermolekularen Wechselwirkungen wie van der Waals Kräften, Wasserstoffbrückenbindungen oder elektrostatischen Anziehungskräften der Polymere basiert. Die vormals in der Polymerlösung homogen verteilten Polymere oder Polymerketten bilden aufgrund der intermolekularen Wechselwirkungen unter bestimmten Bedingungen Cluster innerhalb des Lösungsmittels. Dies geht generell mit einer Erhöhung der Viskosität bzw. mit einer Entmischung der vormals homogenen Polymerlösung im Bereich dieser Cluster einher. Die Polymere bilden also Cluster bzw. Bereiche wie beispielsweise Schichten, Mizellen oder Lamellen aus, in denen sich Polymere stärker konzentrieren als in anderen Bereichen. Innerhalb dieser Bereiche ist dabei nach wie vor Lösungsmittel enthalten, welches von den Polymeren eingeschlossen wird. Die Gelbildung ist von mehreren Parametern wie der Art des Polymers bzw. der Polymere (chemische Struktur, Größe, Verzweigungsgrad etc.), dem Lösungsmittel (Polarität, Mischungsverhältnis etc.), der Konzentration des Polymers bzw. der Polymere und der Temperatur der Polymerlösung abhängig. Einfach gesagt ist bei einsetzender Gelierung ein Teil des Polymers nicht mehr in dem Lösungsmittel löslich, weshalb es zur Ausbildung eines Gels kommt.

Ein Gel kann im Sinne der vorliegenden Erfindung als ein System mit unendlicher Viskosität bzw. (vereinfacht ausgedrückt) als ein hochelastischer, gummiartiger Feststoff betrachtet werden. Genauer ausgedrückt können die sich in erfindungsgemäßen Verfahren bildenden Polymergelschichten als disperse Systeme beschrieben werden, die aus mindestens zwei Komponenten, nämlich aus (i) ein oder mehreren Polymeren, welche als feste Komponente vorliegen, und (ii) einem Lösungsmittel, welches als flüssige Komponente vorliegt, bestehen. Das Polymer bildet dabei ein schwammartiges, dreidimensionales Netzwerk, dessen Poren mit dem Lösungsmittel gefüllt sind. Das als flüssige Komponente vorliegende Lösungsmittel ist dadurch in den als feste Komponente vorliegenden ein oder mehreren Polymeren immobilisiert. Die sich in erfindungsgemäßen Verfahren bildenden Polymergelschichten stellen physikalische Gele dar, welche thermisch reversibel sind.

Durch Abkühlen physikalisch gelierbare Polymerlösung bedeutet, dass das physikalische Gelieren durch die (lokale) Absenkung der Temperatur in der Polymerlösung hervorgerufen werden kann. Durch die (lokale) Absenkung der Temperatur in der Polymerlösung ist nicht mehr das gesamte Polymer in dem Lösungsmittel löslich, wodurch ein sogenannter Gelpunkt überschritten bzw. eine sogenannte Geltemperatur unterschritten wird und die Polymerlösung zu gelieren beginnt.

Ein wesentlicher Aspekt der Erfindung basiert darauf, dass die Temperaturabhängigkeit der Gelbildung bei der Applikation einer (möglichst dünnen und dichten) selektiven Trennschicht auf der Oberfläche eines anorganischen porösen Trägers berücksichtigt wird. Die Erfinder haben erkannt, dass durch Kontaktieren der in einem ersten Schritt hergestellten oder bereitgestellten Polymerlösung mit einem gekühlten anorganischen porösen Träger, dessen Temperatur unmittelbar vor dem Kontaktieren mit der Polymerlösung mindestens 5 °C unterhalb der Temperatur liegt, bei welcher die Polymerlösung (P) physikalisch zu gelieren beginnt, die Verfahrensbedingungen so eingestellt werden, dass die Polymerlösung (lokal, das heißt an der Grenzfläche zwischen dem gekühlten anorganischen porösen Träger und der Polymerlösung) abkühlt und daraufhin unter Ausbildung einer Polymergelschicht an der Oberfläche des anorganischen porösen Trägers physikalisch geliert.

Mit anderen Worten: Die durch Abkühlen physikalisch gelierbare Polymerlösung befindet sich auf einem höheren Temperaturniveau (oberhalb der Geltemperatur bzw. unterhalb des Gelpunktes) als der zu beschichtende gekühlte anorganische poröse Träger (unterhalb der Geltemperatur bzw. oberhalb des Gelpunktes). Durch Kontaktieren der in Schritt a) hergestellten oder bereitgestellten Polymerlösung mit einem gekühlten anorganischen porösen Träger ändert sich nunmehr das Temperaturniveau der Polymerlösung in der Weise, dass dessen Geltemperatur (lokal) unterschritten bzw. dessen Gelpunkt (lokal) überschritten wird, wobei eine Polymergelschicht gezielt an der Oberfläche des anorganischen porösen Trägers gebildet wird. Dadurch, dass die Temperatur des gekühlten anorganischen porösen Trägers mindestens 5 °C unterhalb der Temperatur liegt, bei welcher die Polymerlösung physikalisch zu gelieren beginnt, findet die Ausbildung der Polymergelschicht dabei so schnell statt, dass für ein Eindringen der niedrigviskosen Polymerlösung in die Poren des anorganischen porösen Trägers keine Zeit verbleibt und die niedrigviskose Polymerlösung daher nicht in die Poren des anorganischen porösen Trägers infiltrieren kann. Nach Ausbildung der Polymergelschicht an der Oberfläche fungiert diese als "Schutzschicht", welche zusätzlich verhindert, dass die niedrigviskose Polymerlösung in die Poren des anorganischen porösen Trägers infiltrieren kann.

Ein Vorteil in der Verwendung von anorganischen Trägern liegt unter anderem darin, dass diese eine bessere, das heißt höhere, Temperaturleitfähigkeit als zum Beispiel sonst übliche (dünne) organische Trägermaterialien aufweisen. Die bessere Temperaturleitfähigkeit der anorganischen Träger ermöglicht eine effizientere (lokale) Abkühlung der Polymerlösung bei Kontaktieren des gekühlten anorganischen Trägers mit der Polymerlösung und folglich eine schnellere Ausbildung einer Polymergelschicht an der Oberfläche des anorganischen porösen Trägers.

Die Trocknung der Polymergelschicht in Schritt c) des erfindungsgemäßen Verfahrens bewirkt, dass das Lösungsmittel (zumindest größtenteils, vorzugsweise vollständig) aus der Polymergelschicht - unter Ausbildung einer selektiven Trennschicht - verdampft, so dass die Gastrennmembran resultiert. Die Trocknung findet vorzugsweise (zumindest anfänglich) unterhalb des Siedepunktes des Lösungsmittels und unterhalb der Schmelztemperatur des Polyether-Polyamid-Block-Copolymers statt. Die sich ausbildende selektive Trennschicht (Polymerschicht) kann als dünn und dicht charakterisiert werden und weist keine künstlich induzierte Porenstruktur auf. Während des Schritts der Trocknung findet keine chemische Vernetzung des Polyether-Polyamid-Block-Copolymers statt.

Polyether-Polyamid-Block-Copolymere, welche auch unter dem Handelsnamen Pebax® bekannt sind, eignen sich sowohl als Membranmaterial (gute Selektivität und Permeabilität) und besitzen zudem aufgrund der intermolekularen Wechselwirkungen (Wasserstoffbrückenbindungen) ihrer Polyamid Segmente exzellente Voraussetzungen zur physikalischen Gelierung.

Bevorzugt ist ein erfindungsgemäßes Verfahren, wobei das Lösungsmittel der Polymerlösung (P) ausgewählt ist aus der Liste bestehend aus: Wasser, Alkoholen, Ethyllactat, N-Methyl-2-pyrrolidon, Dimethylacetamid, Dimethylformamid, 2,2,4-Trimethylpentan, Toluol und deren Mischungen, wobei das Lösungsmittel bevorzugt Wasser, Alkohol oder ein Gemisch aus Wasser und Alkohol ist, besonders bevorzugt ein Gemisch aus Wasser und Ethanol.

Die Polymerlösung (P) kann neben dem Polyether-Polyamid-Block-Copolymer und dem Lösungsmittel weitere Bestandteile enthalten. Zu diesen weiteren Bestandteilen zählen unter anderem Salze, Katalysatoren, Farbmittel und Gelbildner.

Bevorzugt ist ein erfindungsgemäßes Verfahren, wobei die Konzentration des Polyether-Polyamid-Block-Copolymers in der Polymerlösung (P) 3 Gew.-% bis 13 Gew.-% beträgt, bevorzugt 5 Gew.-% bis 12 Gew.-%, jeweils bezogen auf die Gesamtmasse der Polymerlösung.

Polymerlösungen mit vorstehend genannten (relativ geringen) bevorzugten Konzentrationen des Polyether-Polyamid-Block-Copolymers verfügen über eine vergleichsweise niedrige Viskosität. Der Einsatz solch niedrigviskoser Polymerlösungen erlaubt die Ausbildung besonders dünner selektiver Trennschichten (Polymerschichten).

Aus dem gleichen Grund ist ein erfindungsgemäßes Verfahren bevorzugt, wobei die Polymerlösung (P) eine dynamische Viskosität von maximal 120 mPas aufweist.

Die Bestimmung der dynamischen Viskosität erfolgt mit einem Kugelroll-Viskosimeter, vorzugsweise mit dem Kugelroll-Viskosimeter Lovis 2000 ME von Anton Paar, wobei die dynamische Viskosität bei jener Temperatur bestimmt wird, welche der Temperatur der Polymerlösung (P) unmittelbar vor dem Kontaktieren in Schritt b) entspricht. Wenn zum Beispiel die Temperatur der Polymerlösung (P) unmittelbar vor dem Kontaktieren in Schritt b) 40 °C beträgt, so erfolgt auch die Bestimmung der dynamischen Viskosität bei 40 °C. Vorzugsweise läuft die Bestimmung der dynamischen Viskosität automatisiert ab.

Bei einem Kugelroll-Viskosimeter wird die Rollzeit einer Kugel durch eine Probe der zu prüfenden Substanz (Polymerlösung) nach dem Höppler-Kugelfallprinzip gemessen. Die zu prüfende Substanz kann dabei sowohl transparent als auch opak sein. Bei der Bestimmung der dynamischen Viskosität ist insbesondere darauf zu achten, dass

- die Kapillare mit Kugel so gewählt wird, dass diese zum Viskositätsbereich der Probe passt, und

- die Probe keine Luftblasen aufweist.

Im Rahmen der vorliegenden Erfindung wird für die Messung der dynamischen Viskosität der Polymerlösung (P) vorzugsweise eine Stahl-Kapillare mit einem Durchmesser von 2,5 mm verwendet.

Ein erfindungsgemäßes Verfahren ist bevorzugt, wobei der anorganische poröse Träger (T) einen durchschnittlichen Porendurchmesser im Bereich von 0,05 μm bis 10 μm hat, bevorzugt im Bereich von 0,5 μm bis 2,5 μm. Solche Porendurchmesser sind insbesondere bei Membranen für die Gastrennung in Membranreaktoren interessant, welche für die heterogene Katalyse von Gasphasenreaktionen verwendet werden. Mit aus dem Stand der Technik bekannten Verfahren war es bislang nicht möglich, anorganische "großporige" Träger (das heißt anorganische poröse Träger mit solchen Porendurchmessern wie vorstehend genannt) mit einer genügend dünnen selektiven (polymeren) Trennschicht zu beschichten, so dass für die (effiziente) Gastrennung in Membranreaktoren geeignete Membranen resultieren. Mit anderen Worten wird es durch das erfindungsgemäße Verfahren erstmalig möglich Membranen, umfassend einen anorganischen "großporigen" Träger und eine Polymerschicht als selektive Trennschicht) herzustellen, welche für die (effiziente) Gastrennung in Membranreaktoren geeignet sind. Der durchschnittliche Porendurchmesser kann zum Beispiel mittels Mercury Intrusion Porosimtry (MIP) bestimmt werden.

Bevorzugt sind des Weiteren erfindungsgemäße Verfahren, wobei der anorganische poröse Träger (T) aus einem oder mehreren anorganischen Materialien, vorzugsweise aus einem oder mehreren keramischen Materialien, besteht, wobei das eine Material oder zumindest eines der mehreren Materialien ausgewählt ist aus der Liste bestehend aus: Siliciumcarbid, Siliciumoxid, Aluminiumoxid, Zirconiumoxid, Titanoxid und Sintermetall,
bevorzugt ist das eine anorganische Material oder zumindest eines der mehreren anorganischen Materialien Siliciumcarbid.

Bevorzugt sind des Weiteren erfindungsgemäße Verfahren, wobei der anorganische poröse Träger (T) ein monolithischer Werkstoff mit einem offenen Porensystem ist, wobei das Porensystem isotropisch oder anisotropisch ist.

Unter dem Begriff "keramischen Materialien" sind aus anorganischen und vorzugsweise überwiegend nichtmetallischen Verbindungen oder Elementen (z.B. Kohlenstoff) aufgebaute und zu mehr als 30 bis zu 98 Volumen-% kristalline Materialien zu verstehen.

Der Begriff "monolithischer Werkstoff" bezeichnet im Rahmen der vorliegenden Erfindung Werkstoffe, die makroskopisch homogen erscheinen und in einem natürlichen oder Fertigungsprozess entstanden sind. Monolithische Werkstoffe können durchaus mehrere Phasen enthalten (z.B. kristalline und amorphe Phasen nebeneinander), die man aber erst unter dem Mikroskop oder durch andere geeignete analytische Methoden erkennt.

Ein offenes Porensystem liegt im Rahmen der Erfindung dann vor, wenn die Poren des anorganischen porösen Trägers bzw. des monolithischen Werkstoffes (zumindest teilweise, bevorzugt größtenteils, besonders bevorzugt vollständig) mit dem den Träger umgebenden Medium in Verbindung stehen.

Unter einem anisotropen Porensystem ist zu verstehen, dass die Porengröße und/oder Porenstruktur der Poren entlang einer bestimmten Raumrichtung des Trägers variiert. Im Gegensatz dazu zeichnet sich ein isotropes Porensystem durch eine gleichmäßig erscheinende Porengröße und/oder Porenstruktur der Poren entlang sämtlicher Raumrichtungen des Trägers aus.

Bevorzugt ist ein erfindungsgemäßes Verfahren, wobei der anorganische poröse Träger (T) eine zylindrische Form aufweist (vorzugsweise (i) mit einer Länge im Bereich von 10 bis 150 cm, bevorzugt im Bereich von 20 bis 120 cm, und vorzugsweise (ii) mit einem Durchmesser von 1 bis 5 cm, bevorzugt im Bereich von 2 bis 3 cm), welche überzur Längsachse verlaufende, wabenförmig angeordnete innere Kanäle verfügt. Als Beispiel für eine solche Form verweisen wir auf die Figuren a) und b) des Dokuments "Monolithic SiC supports with tailored hierarchical porosity for molecularly selective membranes and supported liquid-phase catalysis" von Portela et al. (Catalysis Today, 2020, In Press, https://doi.org/10.1016/j.cattod.2020.06.045). Besonders bevorzugt ist ein erfindungsgemäßes Verfahren, wobei der anorganische poröse Träger (T) eine wie in den Figuren a) und b) des Dokuments "Monolithic SiC supports with tailored hierarchical porosity for molecularly selective membranes and supported liquid-phase catalysis" von Portela et al. (Catalysis Today, 2020, In Press, https://doi.org/10.1016/j.cattod.2020.06.045) abgebildete Form und Struktur aufweist. Vorzugsweise wird die Unterseite und/oder Oberseite der zylindrischen Form vor der Durchführung von Schritt b) verschlossen, so dass während des Kontaktierens der Polymerlösung mit dem gekühlten anorganischen porösen Träger keine Polymerlösung in die inneren Kanäle eintreten kann.

Erfindungsgemäße Verfahren sind bevorzugt, wobei unmittelbar vor dem Kontaktieren in Schritt b) die Temperatur $T_P$ der in Schritt a) hergestellten oder bereitgestellten Polymerlösung (P) maximal 5 °C oberhalb der Temperatur liegt, bei welcher die Polymerlösung (P) physikalisch zu gelieren beginnt,
wobei die Temperatur $T_P$ bevorzugt im Bereich zwischen 40 und 45 °C liegt, besonders bevorzugt 40 °C beträgt.

Bevorzugt sind des Weiteren erfindungsgemäße Verfahren, wobei unmittelbar vor dem Kontaktieren in Schritt b) die Temperatur $T_T$ des gekühlten anorganischen porösen Trägers (T) maximal 20 °C ist, bevorzugt maximal 15 °C.

Bevorzugt sind des Weiteren erfindungsgemäße Verfahren, wobei unmittelbar vor dem Kontaktieren in Schritt b) die Differenz $\Delta T_P$-$T_T$ zwischen der Temperatur $T_P$ der in Schritt a) hergestellten oder bereitgestellten Polymerlösung (P) und der Temperatur $T_T$ des gekühlten anorganischen porösen Trägers (T) mindestens 10 °C beträgt, bevorzugt mindestens 15 °C, besonders bevorzugt mindestens 20 °C, ganz besonders bevorzugt mindestens 30 °C.

Insbesondere bei größeren Poren (bei welchen die Gefahr eines Eindringens der niedrigviskosen Polymerlösung größer ist) ist ein größerer Temperaturunterschied zwischen der Temperatur $T_P$ der Polymerlösung (P) und der Temperatur $T_T$ des gekühlten anorganischen porösen Trägers (T) von Vorteil, da dann das Gelieren bzw. die Ausbildung einer Polymergelschicht noch schneller eintritt und eine Poreninfiltration der Lösung so noch besser verhindert wird.

Ebenfalls bevorzugt ist ein erfindungsgemäßes Verfahren, wobei das Kontaktieren der hergestellten oder bereitgestellten Polymerlösung (P) mit einem gekühlten anorganischen porösen Träger (T) in Schritt b) die folgenden Schritte umfasst:

b1) Eintauchen des gekühlten anorganischen porösen Trägers (T) in die Polymerlösung (P),
wobei bevorzugt das Eintauchen mit einer Geschwindigkeit im Bereich von 100 mm/min bis 1000 mm/min durchgeführt wird, besonders bevorzugt im Bereich von 250 mm/min bis 350 mm/min,

b2) Verweilen lassen des anorganischen porösen Trägers (T) in der Polymerlösung (P),
bevorzugt für einen Zeitraum von 20 s bis 100 s, besonders bevorzugt für einen Zeitraum von 40 s bis 80 s,

b3) Herausziehen des anorganischen porösen Trägers (T) aus der Polymerlösung (P),
wobei bevorzugt das Herausziehen mit einer Geschwindigkeit im Bereich von 100 mm/min bis 1000 mm/min durchgeführt wird, besonders bevorzugt im Bereich von 250 mm/min bis 350 mm/min.

Schritt b) des erfindungsgemäßen Verfahrens wird somit vorzugsweise in Form eines Dip Coatings durchgeführt, wobei durch Anwendung der vorstehend als bevorzugt bezeichneten Parameter die Ausbildung der Polymergelschicht an der Oberfläche des anorganischen porösen Trägers auf vorteilhafte Weise beeinflusst werden kann.

Im Rahmen des vorstehend beschriebenen bevorzugt erfindungsgemäßen Verfahrens sind solche Verfahren weiter bevorzugt, wobei die Schritte Eintauchen b1), Verweilen b2) und Herausziehen b3) jeweils einmal oder mehrmals durchgeführt werden, bevorzugt 1 bis 3 Mal, besonders bevorzugt 1 Mal.

Das mehrmalige Durchführen der Schritte b1), b2) und b3) ermöglicht es, die Ausbildung einer dichten bzw. durchgängigen Polymergelschicht (und damit letztendlich die spätere Ausbildung einer dichten bzw. durchgängigen selektiven Trennschicht) an der Oberfläche des anorganischen porösen Trägers zu gewährleisten, sofern eine solche dichte bzw. durchgängige Polymergelschicht nach einmaligem Durchführen der Schritte b1), b2) und b3) noch nicht erhalten werden konnte. Aus verfahrensökonomischen Überlegungen und aufgrund der Tatsache, dass primär die Ausbildung einer möglichst dünnen Polymergelschicht angestrebt wird (da aus dünnen Polymergelschichten auch spätere dünne selektive Trennschichten resultieren), ist das einmalige Durchführen der Schritte b1), b2) und b3) (unter sofortigem Erhalt einer dicht bzw. durchgängigen und zugleich möglichst dünnen Polymergelschicht) besonders bevorzugt.

Bevorzugt ist ein erfindungsgemäßes Verfahren, wobei das Trocknen der Polymergelschicht auf dem Träger (T) in Schritt c) zumindest die folgenden Schritte umfasst:

c1) erstes Trocknen

bei einer Temperatur, welche mindestens 5 °C unterhalb der Temperatur liegt, bei welcher die Polymerlösung (P) physikalisch zu gelieren beginnt,
und

für einen Zeitraum von 5 bis 15 Stunden,

c2) zweites Trocknen in einem Temperaturbereich von 80 °C bis 160 °C und für einen Zeitraum von 5 bis 20 Stunden.

Durch solche zweistufigen Trocknungsschritte, wie vorstehend als bevorzugt bezeichnet, wird eine schonende und zugleich gründliche Trocknung der Polymergelschicht gewährleistet, was sich gleichzeitig vorteilhaft auf die sich ausbildende selektive Trennschicht auswirkt. Insbesondere wird durch das erste Trocknen c1) sichergestellt, dass sich die einmal in Schritt b) ausgebildete Polymergelschicht während des Trocknungsschritts nicht versehentlich wieder auflöst und somit letztendlich einer unerwünschten Poreninfiltration während des Trocknungsschrittes vorgebeugt. Das erste Trocknen c1) dient somit einer schonenden ersten Entfernung (Verdampfung) von Lösungsmittel. Das erste Trocknen c1) dauert vorzugsweise so lange an, bis eine Gewichtskonstanz des beschichteten anorganischen porösen Trägers festgestellt werden kann bzw. kein merkliches Verdampfen von Lösungsmittel mehr registriert werden kann. Das anschließende zweite Trocknen c2) bei höheren Temperaturen dient nunmehr einer weiteren Entfernung (Verdampfung) von Lösungsmittel, ohne dass in diesem Stadium noch die Gefahr einer Auflösung der Beschichtung besteht. Durch die zweite Trocknung c2) wird somit eine gründliche Trocknung der sich ausbildenden bzw. sich ausgebildeten selektiven Trennschicht (Polymerschicht) unter weitgehender oder vollständiger Entfernung des Lösungsmittels gewährleistet.

Ein erfindungsgemäßes Verfahren ist bevorzugt, bei welchem der gekühlte anorganische poröse Träger (T) vor dem in Kontakt bringen mit der Polymerlösung (P) mit einer Flüssigkeit benetzt wird,

wobei vorzugsweise der gekühlte anorganische poröse Träger (T) mit einer Flüssigkeit benetzt wird, die von dem Lösungsmittel der in Schritt a) hergestellten oder bereitgestellten Polymerlösung (P) unterschiedlich ist,

wobei besonders bevorzugt der gekühlte anorganische poröse Träger (T) mit Wasser benetzt wird.

Durch das Benetzen des gekühlten anorganischen porösen Trägers vor dem in Kontakt bringen mit der Polymerlösung kann die Temperatur des anorganischen porösen Trägers besser kontrolliert werden, da der poröse Anteil des anorganischen porösen Trägers in diesem Fall mit einer Flüssigkeit gefüllt ist. Die in den Poren des gekühlten anorganischen porösen Trägers befindliche Flüssigkeit bewirkt im Schritt b) des Kontaktierens eine Erhöhung der Wärmeleitfähigkeit an der Grenzschicht zwischen dem anorganischen porösen Träger und der Polymerlösung, wodurch - im Vergleich zu erfindungsgemäßen Verfahren ohne vorherige Benetzung des gekühlten anorganischen porösen Trägers - das (physikalische) Gelieren der Polymerlösung schneller einsetzt. Des Weiteren bewirkt das Benetzen des gekühlten anorganischen porösen Trägers, dass die Poren des anorganischen porösen Trägers (wie vorstehend bereits erwähnt) vor dem in Kontakt bringen mit der Polymerlösung bereits gefüllt sind, sodass das Eindringen von Polymerlösung in die Poren des anorganischen porösen Trägers im Schritt b) des Kontaktierens weiter erschwert wird. Das Benetzen des gekühlten anorganischen porösen Trägers vor dem in Kontakt bringen mit der Polymerlösung bewirkt somit insgesamt, dass eine unerwünschte Infiltration der Poren des anorganischen porösen Trägers weiter erschwert oder verhindert wird.

Ebenfalls bevorzugt sind erfindungsgemäße Verfahren, wobei die Poren des anorganischen porösen Trägers der resultierenden Membran im Wesentlichen frei sind von dem Material der auf den anorganischen porösen Träger applizierten selektiven Trennschicht.

Ebenfalls bevorzugt sind erfindungsgemäße Verfahren, wobei die auf dem anorganischen porösen Träger applizierte selektive Trennschicht eine geschlossene Polymerschicht mit einer Dicke von maximal 20 $\mu$m, bevorzugt maximal 10 $\mu$m, besonders bevorzugt maximal 5 $\mu$m, ganz besonders bevorzugt maximal 1 $\mu$m ist.

Ebenfalls bevorzugt sind erfindungsgemäße Verfahren, wobei das Verhältnis aus dem durchschnittlichen Porendurchmesser des anorganischen porösen Trägers (T) und der Dicke der auf dem anorganischen porösen Träger applizierten selektiven Trennschicht im Bereich von 0,05 zu 20 bis 10 zu 1 liegt, bevorzugt im Bereich von 0,5 zu 10 bis 2,5 zu 1, besonders bevorzugt im Bereich von 2,5 zu 10 bis 2,5 zu 5.

Wie vorstehend bereits erläutert, ist es wünschenswert, dass die Poren des anorganischen porösen Trägers im Wesentlichen (vorzugsweise vollständig) frei von dem Material der auf den anorganischen porösen Träger applizierten selektiven Trennschicht, da offene Poren bzw. Porenkanäle des anorganischen porösen Trägers entscheidend sind für einen effizienten Gastransport der aus dem erfindungsgemäßen Verfahren resultierenden Membran.

Zugunsten eines effizienten Gastransports wird ebenfalls die Applikation möglichst dünner und zugleich dichter (das heißt geschlossener) selektiver Trennschichten (Polymerschichten) angestrebt, wobei im Rahmen von erfindungsgemäßen Verfahren die Applikation von geschlossenen Polymerschichten mit vorstehend genannten bevorzugten maximalen Dicken bevorzugt ist. Im Rahmen der vorliegenden Erfindung erfolgt die Bestimmung der Dicke der Polymerschicht vorzugsweise durch rasterelektronenmikroskopische Untersuchung von Querschnitten der aus dem erfindungsgemäßen Verfahren resultierenden Membran, wobei die im Rasterelektronenmikroskop erkennbare Polymerschicht mittels eines geräteinternen kalibrierten Maßbands vermessen wird. Die Anfertigung der Querschnitte erfolgt zum Beispiel durch Sägen der aus dem erfindungsgemäßen Verfahren resultierenden Membran mittels einer Diamantdrahtsäge.

Nachfolgend wird die Erfindung anhand von Beispielen näher erläutert. Die nachstehend angegebenen Beispiele sollen die Erfindung dabei näher beschreiben und erklären, ohne ihren Umfang zu beschränken.

Beispiel 1 (erfindungsgemäß):

Eine Membran (umfassend einen porösen Siliciumcarbid Monolithen als Träger und eine darauf applizierte Polymerschicht aus einem Polyether-Polyamid-Block-Copolymer als selektive Trennschicht) wurde wie folgt hergestellt:

a) 30 g des Polyether-Polyamid-Block-Copolymers Pebax® MH 1657 wurden in einem Lösungsmittel aus 189 g Ethanol und 81 g Wasser bei 80 °C unter Rückfluss innerhalb von 12 h gelöst. Anschließend wurde die so hergestellte Polymerlösung auf 40 °C temperiert.

b) Ein zu beschichtender, poröser Siliciumcarbid Monolith von der LiqTech Holding A/S, Hobro, Denmark (dessen Unterseite verschlossen wurde, um das Einlaufen von Polymerlösung in die inneren Kanäle des Monolithen während des vorliegenden Schrittes zu verhindern), wurde auf 15 °C gekühlt und unmittelbar im Anschluss mithilfe einer Tauchbeschichtungsanlage in die in Schritt a) hergestellte, auf 40 °C temperierte, Polymerlösung eingetaucht. Die Temperatur des gekühlten Siliciumcarbid Monolithen wurde mit 15 °C so gewählt, dass dessen Temperatur unmittelbar vor dem Eintauchen in die Polymerlösung mindestens 5 °C unterhalb jener Temperatur lag, bei welcher die in Schritt a) hergestellte Polymerlösung physikalisch zu gelieren beginnt. Das Eintauchen des porösen Siliciumcarbid Monolithen geschah mit einer Geschwindigkeit von 300 mm/min. Nach dem Eintauchen und einer sich daran anschließenden Verweilzeit von 60 s wurde der poröse Siliciumcarbid Monolith wieder aus der Polymerlösung herausgezogen. Das Herausziehen des porösen Siliciumcarbid Monolithen geschah mit einer Geschwindigkeit von 300 mm/min.

c) Im Anschluss an Schritt b) wurde der beschichtete, poröse Siliciumcarbid Monolith zunächst für 12 h bei Umgebungsbedingungen (25 °C) getrocknet. Anschließend wurde der beschichtete, poröse Siliciumcarbid Monolith für weitere 12 h bei 120 °C getrocknet.

Beispiel 2 (nicht-erfindungsgemäß):

Eine Membran (umfassend einen porösen Siliciumcarbid Monolithen als Träger und eine darauf applizierte Polymerschicht aus einem Polyether-Polyamid-Block-Copolymer als selektive Trennschicht) wurde wie im vorstehenden Beispiel 1 beschrieben hergestellt, wobei die Temperatur des zu beschichtenden, porösen Siliciumcarbid Monolithen in Schritt b) Raumtemperatur (25 °C) betrug. Die Temperatur des Siliciumcarbid Monolithen wurde in Beispiel 2 damit so gewählt, dass dessen Temperatur unmittelbar vor dem Eintauchen in die Polymerlösung nicht mindestens 5 °C unterhalb jener Temperatur lag, bei welcher die in Schritt a) hergestellte Polymerlösung physikalisch zu gelieren beginnt (die Ausbildung einer Polymergelschicht auf der Oberfläche des Siliciumcarbid Monolithen durch Eintauchen desselben in die Polymerlösung also in Beispiel 2, wenn überhaupt, zwangsläufig deutlich langsamer als in Beispiel 1 erfolgte).

Beispiel 3 (erfindungsgemäß):

Eine Membran (umfassend einen porösen Siliciumcarbid Monolithen als Träger und eine darauf applizierte Polymerschicht aus einem Polyether-Polyamid-Block-Copolymer als selektive Trennschicht) wurde wie im vorstehenden Beispiel 1 beschrieben hergestellt, wobei der zu beschichtende, poröse Siliciumcarbid Monolith vor dem in Kontakt bringen mit der Polymerlösung mit 15 °C kaltem Wasser benetzt wurde; das heißt in Schritt b) ein "nasser", 15 °C kalter poröser Siliciumcarbid Monolith in die Polymerlösung eingetaucht wurde.

Beispiel 4 (erfindungsgemäß):

Eine Membran (umfassend einen porösen Siliciumcarbid Monolithen als Träger und eine darauf applizierte Polymerschicht aus einem Polyether-Polyamid-Block-Copolymer als selektive Trennschicht) wurde wie im vorstehenden Beispiel 3 beschrieben hergestellt, wobei nach dem Schritt c) des Trocknens noch folgende zusätzliche Schritte durchgeführt wurden:

d) Der beschichtete, poröse Siliciumcarbid Monolith aus Schritt c) wurde erneut mithilfe einer Tauchbeschichtungsanlage in die in Schritt a) hergestellte, auf 40 °C temperierte, Polymerlösung eingetaucht. Die Temperatur des beschichteten, porösen Siliciumcarbid Monolithen betrug hierbei Raumtemperatur (25 °C). Das Eintauchen des beschichteten, porösen Siliciumcarbid Monolithen geschah mit einer Geschwindigkeit von 300 mm/min. Nach dem Eintauchen und einer sich daran anschließenden Verweilzeit von 60 s wurde der poröse Siliciumcarbid Monolith wieder aus der Polymerlösung herausgezogen. Das Herausziehen des porösen Siliciumcarbid Monolithen geschah mit einer Geschwindigkeit von 300 mm/min.

e) Im Anschluss an Schritt d) wurde der (durch zweifaches Eintauchen) beschichtete, poröse Siliciumcarbid Monolith zunächst für 12 h bei Umgebungsbedingungen (25 °C) getrocknet. Anschließend wurde der beschichtete, poröse Siliciumcarbid Monolith für weitere 12 h bei 120 °C getrocknet.

Permeanzen und Selektivitäten der in den Beispielen 1 bis 4 hergestellten Membranen:
Die Permeanzen und Selektivitäten der in den Beispielen 1 bis 4 hergestellten Membranen wurden jeweils bei einer Temperatur von 30 °C untersucht.
Die Permeanzen für die Gase $H_2$, $N_2$, $O_2$, $CO_2$ und $CH_4$ wurden jeweils mit der Druckanstiegsmethode bestimmt. Hierbei wurde auf die Feed-Seite ein konstanter Druck des jeweiligen Gases von 500 mbar aufgegeben und die Zeit gemessen, die benötigt wird, um auf der Permeat-Seite (bei konstantem Volumen) einen Druckanstieg von 1 auf 3 mbar zu erreichen. Aus dem Ergebnis dieser Messung lässt sich unter Verwendung folgender Formel die Permeanz berechnen:

$$L = \frac{P}{l} = \frac{V_p}{A_m R T t} \ln\left(\frac{p_f - p_{p0}}{p_f - p_{p1}}\right),$$

mit

L = Permeanz,

P = Permeabilität,

*l* = Dicke der Membran,

$V_p$ = Permeat-Volumen,

$A_m$ = Membran-Fläche,

R = universelle Gaskonstante,

T = Temperatur,

t = Zeit des Druckanstiegs,

$p_{p0}$ = Anfangsdruck des Druckanstiegs im Permeat,

$p_{p1}$ = Enddruck des Druckanstiegs im Permeat, und

$p_f$ = Druck im Feed.

Die Permeanzen der hergestellten Membranen für die Gase $H_2$, $N_2$, $O_2$, $CO_2$ und $CH_4$ sind in Tabelle 1 angegeben.

Die Selektivitäten $CO_2/N_2$, $CO_2/CH_4$, $CO_2/H_2$ ergeben sich aus dem Quotienten der jeweiligen Permeanzen für die entsprechenden Gase und sind in Tabelle 2 angegeben.

Wie sich Tabelle 2 entnehmen lässt, weisen die erfindungsgemäß hergestellten Membranen hohe Selektivitätswerte auf, welche mit den angegebenen Vergleichsdaten vergleichbar sind. Die erfindungsgemäß hergestellten Membranen verfügen somit über sehr gute Gastrenneigenschaften. Die nicht-erfindungsgemäß hergestellte Membran weist hingegen deutlich schlechtere Selektivitätswerte und somit deutlich schlechtere Gastrenneigenschaften auf.

Die vergleichsweise hohen Permeanzen bei gleichzeitig niedrigen Selektivitätswerten der im nicht-erfindungsgemäßen Beispiel 2 hergestellten Membran lassen sich dadurch erklären, dass die im Rahmen des nicht-erfindungsgemäßen Beispiels 2 applizierte Polymerschicht Defekte bzw. Fehlstellen aufweist. Mit anderen Worten verfügt die im Rahmen des nicht-erfindungsgemäßen Beispiels 2 hergestellte Membran nachteiligerweise über keine dichte Polymerschicht als Trennschicht.

Tabelle 1:

| Permeanz (1 GPU = $3{,}347 \cdot 10^{-10}$ mol·m$^{-2}$·s$^{-1}$·Pa$^{-1}$) | Beispiel 1 (erfindungsgemäß) [mol·m$^{-2}$·s$^{-1}$·Pa$^{-1}$] ([GPU]) | Beispiel 2 (nicht-erfindungsgemäß) [mol·m$^{-2}$·s$^{-1}$·Pa$^{-1}$] ([GPU]) | Beispiel 3 (erfindungsgemäß) [mol·m$^{-2}$·s$^{-1}$·Pa$^{-1}$] ([GPU]) | Beispiel 4 (erfindungsgemäß) [mol·m$^{-2}$·s$^{-1}$·Pa$^{-1}$] ([GPU]) |
|---|---|---|---|---|
| $H_2$ | $2{,}14 \cdot 10^{-10}$ (0,64) | $1{,}62 \cdot 10^{-9}$ (4,84) | $3{,}55 \cdot 10^{-10}$ (1,06) | $3{,}08 \cdot 10^{-10}$ (0,92) |
| $N_2$ | $4{,}02 \cdot 10^{-11}$ (0,12) | $4{,}25 \cdot 10^{-10}$ (1,27) | $7{,}03 \cdot 10^{-11}$ (0,21) | $6{,}02 \cdot 10^{-11}$ (0,18) |
| $O_2$ | $9{,}04 \cdot 10^{-11}$ (0,27) | $5{,}02 \cdot 10^{-10}$ (1,50) | $1{,}51 \cdot 10^{-10}$ (0,45) | $1{,}24 \cdot 10^{-10}$ (0,37) |
| $CO_2$ | $1{,}83 \cdot 10^{-09}$ (5,48) | $4{,}12 \cdot 10^{-09}$ (12,3) | $3{,}01 \cdot 10^{-09}$ (9,00) | $2{,}46 \cdot 10^{-09}$ (7,36) |
| $CH_4$ | $1{,}14 \cdot 10^{-10}$ (0,34) | $7{,}06 \cdot 10^{-10}$ (2,11) | $1{,}81 \cdot 10^{-10}$ (0,54) | $1{,}61 \cdot 10^{-10}$ (0,48) |

Tabelle 2

| Selektivität [-] | Vergleichsdaten aus dem Journal of Membrane Science 307 (2008), 88-95 | Beispiel 1 (erfindungsgemäß) | Beispiel 2 (nicht-erfindungsgemäß) | Beispiel 3 (erfindungsgemäß) | Beispiel 4 (erfindungsgemäß) |
|---|---|---|---|---|---|
| $CO_2/N_2$ | 45 | 46 | 9,7 | 43 | 41 |
| $CO_2/CH_4$ | 15,6 | 16 | 5,8 | 17 | 15 |
| $CO_2/H_2$ | 9,1 | 8,6 | 2,5 | 8,5 | 8,0 |

Untersuchung der Polymerschicht (selektiven Trennschicht) einer erfindungsgemäß hergestellten Membran:

Die Polymerschicht (selektive Trennschicht) wurde beispielhaft anhand der in Beispiel 3 erfindungsgemäß hergestellten Membran untersucht. Hierfür wurden mehrere Querschnitte von unterschiedlichen Stellen (I, II und III) der Membran hergestellt. Die Anfertigung der Querschnitte erfolgte durch Sägen der aus dem erfindungsgemäßen Verfahren resultierenden Membran mittels einer Diamantdrahtsäge. Die hergestellten Querschnitte wurden anschließend rasterelektronenmikroskopisch unter Verwendung eines Rasterelektronenmikroskops des Typs Merlin von der Carl Zeiss GmbH untersucht.

Fig. 1 zeigt die rasterelektronenmikroskopischen Aufnahmen der Querschnitte I, II und III, welche von unterschiedlichen Stellen der in Beispiel 3 hergestellten Membran angefertigt wurden. Anhand der ebenfalls in Fig. 1 gezeigten schematischen Darstellung der Membran lässt sich erkennen, dass die Querschnitte I und III jeweils vom oberen beziehungsweise unterem Ende der Membran und der Querschnitt II von der Mitte der Membran (jeweils bezogen auf die Längsachse der Membran) angefertigt wurden.

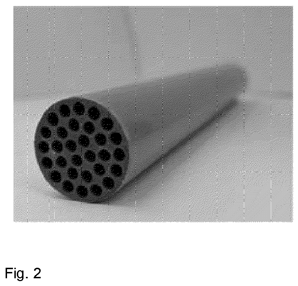

Fig. 2 zeigt zudem beispielhaft ein Bild der in Beispiel 3 hergestellten Membran.

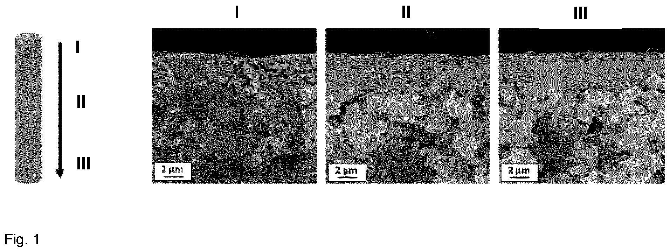

Wie anhand der rasterelektronenmikroskopischen Aufnahmen gemäß Fig. 1 zu erkennen ist, sind die Polymerschichten jeweils dicht und dünn (mit Dicken von etwa 2 bis 4 $\mu$m) ausgebildet. Des Weiteren ist zu erkennen, dass das Material der Polymerschichten nicht in die Poren des Trägers eingedrungen ist, die Poren des Trägers also nicht infiltriert hat.

## Patentansprüche

1. Verfahren zum Herstellen einer Gastrennmembran, wobei die Gastrennmembran einen anorganischen porösen Träger und eine darauf applizierte selektive Trennschicht umfasst,

   umfassend zumindest die folgenden Schritte:

   a) Herstellen oder Bereitstellen einer durch Abkühlen physikalisch gelierbaren Polymerlösung (P) umfassend Polyether-Polyamid-Block-Copolymer in einem Lösungsmittel,
   b) Kontaktieren der in Schritt a) hergestellten oder bereitgestellten Polymerlösung (P) mit einem gekühlten anorganischen porösen Träger (T), so dass die Polymerlösung (P) abkühlt und unter Ausbildung einer Polymergelschicht an der Oberfläche des anorganischen porösen Trägers (T) physikalisch geliert,
   wobei unmittelbar vor dem Kontaktieren in Schritt b) die Temperatur $T_T$ des gekühlten anorganischen porösen Trägers (T) mindestens 5 °C unterhalb der Temperatur liegt, bei welcher die Polymerlösung (P) physikalisch zu gelieren beginnt,
   c) Trocknen der Polymergelschicht auf dem anorganischen porösen Träger (T) unter Ausbildung einer selektiven Trennschicht, so dass die Gastrennmembran resultiert.

2. Verfahren nach Anspruch 1, wobei das Lösungsmittel der Polymerlösung (P) ausgewählt ist aus der Liste bestehend aus: Wasser, Alkoholen, Ethyllactat, N-Methyl-2-pyrrolidon, Dimethylacetamid, Dimethylformamid, 2,2,4-Trimethylpentan, Toluol und deren Mischungen,

   wobei das Lösungsmittel bevorzugt Wasser, Alkohol oder ein Gemisch aus Wasser und Alkohol ist, besonders bevorzugt ein Gemisch aus Wasser und Ethanol.

3. Verfahren nach einem der vorherigen Ansprüche, wobei die Konzentration des Polyether-Polyamid-Block-Copolymers in der Polymerlösung (P) 3 Gew.-% bis 13 Gew.-% beträgt, bevorzugt 5 Gew.-% bis 12 Gew.-%, jeweils bezogen auf die Gesamtmasse der Polymerlösung (P).

4. Verfahren nach einem der vorherigen Ansprüche, wobei der anorganische poröse Träger (T) einen durchschnittlichen Porendurchmesser im Bereich von 0,05 $\mu$m bis 10 $\mu$m hat, bevorzugt im Bereich von 0,5 $\mu$m bis 2,5 $\mu$m.

5. Verfahren nach einem der vorherigen Ansprüche, wobei der anorganische poröse Träger (T) aus einem oder mehreren anorganischen Materialien, vorzugsweise aus einem oder mehreren keramischen Materialien, besteht, wobei das eine Material oder zumindest eines der mehreren Materialien ausgewählt ist aus der Liste bestehend aus: Siliciumcarbid, Siliciumoxid, Aluminiumoxid, Zirconiumoxid, Titanoxid und Sintermetall,

   bevorzugt ist das eine anorganische Material oder zumindest eines der mehreren anorganischen Materialien Siliciumcarbid.

6. Verfahren nach einem der vorherigen Ansprüche, wobei der anorganische poröse Träger (T) ein monolithischer Werkstoff mit einem offenen Porensystem ist, wobei das Porensystem isotropisch oder anisotropisch ist.

7.  Verfahren nach einem der vorherigen Ansprüche, wobei unmittelbar vor dem Kontaktieren in Schritt b) die Temperatur $T_P$ der in Schritt a) hergestellten oder bereitgestellten Polymerlösung (P) maximal 5 °C oberhalb der Temperatur liegt, bei welcher die Polymerlösung (P) physikalisch zu gelieren beginnt,
    wobei die Temperatur $T_P$ bevorzugt im Bereich zwischen 40 und 45 °C liegt, besonders bevorzugt 40 °C beträgt.

8.  Verfahren nach einem der vorherigen Ansprüche, wobei unmittelbar vor dem Kontaktieren in Schritt b) die Temperatur $T_T$ des gekühlten anorganischen porösen Trägers (T) maximal 20 °C ist, bevorzugt maximal 15 °C.

9.  Verfahren nach einem der vorherigen Ansprüche, wobei unmittelbar vor dem Kontaktieren in Schritt b) die Differenz $\Delta T_P\text{-}T_T$ zwischen der Temperatur $T_P$ der in Schritt a) hergestellten oder bereitgestellten Polymerlösung (P) und der Temperatur $T_T$ des gekühlten anorganischen porösen Trägers (T) mindestens 10 °C beträgt, bevorzugt mindestens 15 °C, besonders bevorzugt mindestens 20 °C, ganz besonders bevorzugt mindestens 30 °C.

10. Verfahren nach einem der vorherigen Ansprüche, wobei das Kontaktieren der hergestellten oder bereitgestellten Polymerlösung (P) mit einem gekühlten anorganischen porösen Träger (T) in Schritt b) die folgenden Schritte umfasst:

    b1) Eintauchen des gekühlten anorganischen porösen Trägers (T) in die Polymerlösung (P),
    wobei bevorzugt das Eintauchen mit einer Geschwindigkeit im Bereich von 100 mm/min bis 1000 mm/min durchgeführt wird, besonders bevorzugt im Bereich von 250 mm/min bis 350 mm/min,
    b2) Verweilen lassen des anorganischen porösen Trägers (T) in der Polymerlösung (P),
    bevorzugt für einen Zeitraum von 20 s bis 100 s, besonders bevorzugt für einen Zeitraum von 40 s bis 80 s,
    b3) Herausziehen des anorganischen porösen Trägers (T) aus der Polymerlösung (P),
    wobei bevorzugt das Herausziehen mit einer Geschwindigkeit im Bereich von 100 mm/min bis 1000 mm/min durchgeführt wird, besonders bevorzugt im Bereich von 250 mm/min bis 350 mm/min.

11. Verfahren nach Anspruch 10, wobei die Schritte Eintauchen b1), Verweilen b2) und Herausziehen b3) jeweils einmal oder mehrmals durchgeführt werden, bevorzugt 1 bis 3 Mal, besonders bevorzugt 1 Mal.

12. Verfahren nach einem der vorherigen Ansprüche, wobei das Trocknen der Polymergelschicht auf dem Träger (T) in Schritt c) zumindest die folgenden Schritte umfasst:

    c1) erstes Trocknen

    bei einer Temperatur, welche mindestens 5 °C unterhalb der Temperatur liegt, bei welcher die Polymerlösung (P) physikalisch zu gelieren beginnt,
    und
    für einen Zeitraum von 5 bis 15 Stunden,

    c2) zweites Trocknen in einem Temperaturbereich von 80 °C bis 160 °C und für einen Zeitraum von 5 bis 20 Stunden.

13. Verfahren nach einem der vorherigen Ansprüche, wobei der gekühlte anorganische poröse Träger (T) vor dem in Kontakt bringen mit der Polymerlösung (P) mit einer Flüssigkeit benetzt wird,

    wobei vorzugsweise der gekühlte anorganische poröse Träger (T) mit einer Flüssigkeit benetzt wird, die von dem Lösungsmittel der in Schritt a) hergestellten oder bereitgestellten Polymerlösung (P) unterschiedlich ist,
    wobei besonders bevorzugt der gekühlte anorganische poröse Träger (T) mit Wasser benetzt wird.

14. Verfahren nach einem der vorherigen Ansprüche, wobei die auf dem anorganischen porösen Träger applizierte selektive Trennschicht eine geschlossene Polymerschicht mit einer Dicke von maximal 20 $\mu$m, bevorzugt maximal 10 $\mu$m, besonders bevorzugt maximal 5 $\mu$m, ganz besonders bevorzugt maximal 1 $\mu$m ist.

**Claims**

1. Process for producing a gas separation membrane, wherein the gas separation membrane comprises an inorganic porous carrier and a selective separation layer applied thereto, comprising at least the following steps:

   a) producing or providing a polymer solution (P) which is physically gelatable by cooling and comprises a polyether-polyamide block copolymer in a solvent,
   b) contacting the polymer solution (P) produced or provided in step a) with a cooled inorganic porous carrier (T), such that the polymer solution (P) cools down and physically gelates to form a polymer gel layer on the surface of the inorganic porous carrier (T),
   wherein, immediately prior to the contacting in step b), the temperature $T_T$ of the cooled inorganic porous carrier (T) is at least 5°C below the temperature at which the polymer solution (P) begins to physically gelate,
   c) drying the polymer gel layer on the inorganic porous carrier (T) to form a selective separation layer, so as to result in the gas separation membrane.

2. Process according to Claim 1, wherein the solvent of the polymer solution (P) is selected from the list consisting of: water, alcohols, ethyl lactate, N-methyl-2-pyrrolidone, dimethylacetamide, dimethylformamide, 2,2,4-trimethylpentane, toluene and mixtures thereof,
   wherein the solvent is preferably water, alcohol or a mixture of water and alcohol, more preferably a mixture of water and ethanol.

3. Process according to either of the preceding claims, wherein the concentration of the polyether-polyamide block copolymer in the polymer solution (P) is 3% by weight to 13% by weight, preferably 5% by weight to 12% by weight, based in each case on the total mass of the polymer solution (P).

4. Process according to any of the preceding claims, wherein the inorganic porous carrier (T) has an average pore diameter in the range from 0.05 $\mu$m to 10 $\mu$m, preferably in the range from 0.5 $\mu$m to 2.5 $\mu$m.

5. Process according to any of the preceding claims, wherein the inorganic porous carrier (T) consists of one or more inorganic materials, preferably of one or more ceramic materials, wherein the material or at least one of the two or more materials is selected from the list consisting of: silicon carbide, silicon oxide, aluminium oxide, zirconium oxide, titanium oxide and sintered metal,
   where the inorganic material or at least one of the two or more inorganic materials is preferably silicon carbide.

6. Process according to any of the preceding claims, wherein the inorganic porous carrier (T) is a monolithic material having an open pore system, where the pore system is isotropic or anisotropic.

7. Process according to any of the preceding claims, wherein, immediately prior to the contacting in step b), the temperature $T_P$ of the polymer solution (P) produced or provided in step a) is not more than 5°C above the temperature at which the polymer solution (P) begins to physically gelate,
   wherein the temperature $T_P$ is preferably in the range between 40 and 45°C, more preferably 40°C.

8. Process according to any of the preceding claims, wherein, immediately prior to the contacting in step b), the temperature $T_T$ of the cooled inorganic porous carrier (T) is not more than 20°C, preferably not more than 15°C.

9. Process according to any of the preceding claims, wherein, immediately prior to the contacting in step b), the differential $\Delta T_P - T_T$ between the temperature $T_P$ of the polymer solution (P) produced or provided in step a) and the temperature $T_T$ of the cooled inorganic porous carrier (T) is at least 10°C, preferably at least 15°C, more preferably at least 20°C, most preferably at least 30°C.

10. Process according to any of the preceding claims, wherein the contacting of the polymer solution (P) produced or provided with a cooled inorganic porous carrier (T) in step b) comprises the following steps:

    b1) immersing the cooled inorganic porous carrier (T) into the polymer solution (P),
    where the immersing is preferably effected at a speed in the range from 100 mm/min to 1000 mm/min, more preferably in the range from 250 mm/min to 350 mm/min,
    b2) leaving the inorganic porous carrier (T) to dwell in the polymer solution (P),

preferably for a dwell time of 20 s to 100 s, more preferably for a dwell time of 40 s to 80 s,
b3) pulling the inorganic porous carrier (T) out of the polymer solution (P),
where the pulling-out is preferably effected at a speed in the range from 100 mm/min to 1000 mm/min, more preferably in the range from 250 mm/min to 350 mm/min.

11. Process according to Claim 10, wherein the steps of immersing b1), leaving-to-dwell b2) and pulling-out b3) are each conducted once or more than once, preferably once to 3 times, more preferably once.

12. Process according to any of the preceding claims, wherein the drying of the polymer gel layer on the carrier (T) in step c) comprises at least the following steps:

    c1) firstly drying

    at a temperature at least 5°C below the temperature at which the polymer solution (P) begins to physically gelate
    and
    for a period of 5 to 15 hours,

    c2) secondly drying within a temperature range from 80°C to 160°C and for a period of 5 to 20 hours.

13. Process according to any of the preceding claims, wherein the cooled inorganic porous carrier (T), before being contacted with the polymer solution (P) is wetted with a liquid,

    wherein the cooled inorganic porous carrier (T) is preferably wetted with a liquid other than the solvent of the polymer solution (P) produced or provided in step a),
    wherein the cooled inorganic porous carrier (T) is more preferably wetted with water.

14. Process according to any of the preceding claims, wherein the selective separation layer applied atop the inorganic porous carrier is a continuous polymer layer having a thickness of not more than 20 μm, preferably not more than 10 μm, more preferably not more than 5 μm, most preferably not more than 1 μm.

**Revendications**

1. Procédé de fabrication d'une membrane de séparation de gaz, dans lequel la membrane de séparation de gaz comprend un support poreux inorganique et une couche de séparation sélective appliquée sur celui-ci, comprenant au moins les étapes suivantes :

    a) la fabrication ou la fourniture d'une solution de polymère (P) gélifiable physiquement par refroidissement comprenant un copolymère bloc de polyéther-polyamide dans un solvant,
    b) la mise en contact de la solution de polymère (P) fabriquée ou fournie dans l'étape a) avec un support (T) poreux inorganique refroidi de telle sorte que la solution de polymère (P) est refroidie et est gélifiée physiquement en réalisant une couche de gel polymère sur la surface du support (T) poreux inorganique,
    dans lequel directement avant la mise en contact, la température $T_T$ du support (T) poreux inorganique refroidi est, dans l'étape b), inférieure d'au moins 5 °C à la température, à laquelle la solution de polymère (P) commence à se gélifier physiquement,
    c) le séchage de la couche de gel polymère sur le support (T) poreux inorganique en réalisant une couche de séparation sélective de telle sorte que la membrane de séparation de gaz en résulte.

2. Procédé selon la revendication 1, dans lequel le solvant de la solution de polymère (P) est choisi parmi la liste constituée de : eau, alcools, lactate d'éthyle, N-méthyle-2-pyrrolidone, di-méthylacétamide, diméthylformamide, 2,2,4-triméthylpentane, toluène, et leurs mélanges,
dans lequel le solvant est de manière préférée de l'eau, de l'alcool ou un mélange d'eau et d'alcool, de manière particulièrement préférée un mélange d'eau et d'éthanol.

3. Procédé selon l'une quelconque des revendications précédentes, dans lequel la concentration du copolymère bloc de polyéther-polyamide dans la solution de polymère (P) va de 3 % en poids à 13 % en poids, de manière préférée de 5 % en poids à 12 % en poids, respectivement par rapport au poids total de la solution de polymère (P).

**4.** Procédé selon l'une quelconque des revendications précédentes, dans lequel le support (T) poreux inorganique a un diamètre de pore moyen dans la plage de 0,05 $\mu$m à 10 $\mu$m, de manière préférée dans la plage de 0,5 $\mu$m à 2,5 $\mu$m.

**5.** Procédé selon l'une quelconque des revendications précédentes, dans lequel le support (T) poreux inorganique est constitué d'un ou de plusieurs matériaux inorganiques, de préférence d'un ou de plusieurs matériaux en céramique, dans lequel le matériau ou au moins un des plusieurs matériaux est choisi parmi la liste constituée de : carbure de silicium, oxyde de silicium, oxyde d'aluminium, oxyde de zirconium, oxyde de titane et métal fritté, dans lequel le matériau inorganique ou au moins un des plusieurs matériaux inorganiques est du carbure de silicium.

**6.** Procédé selon l'une quelconque des revendications précédentes, dans lequel le support (T) poreux inorganique est un matériau monolithique avec un système de pores ouverts, dans lequel le système de pores est isotropique ou anisotropique.

**7.** Procédé selon l'une quelconque des revendications précédentes, dans lequel directement avant la mise en contact, la température $T_P$ de la solution de polymère (P) fabriquée ou fournie dans l'étape a) est, dans l'étape b) supérieure de maximum 5 °C à la température, à laquelle la solution de polymère (P) commence à se gélifier physiquement, dans lequel la température $T_P$ se situe de manière préférée dans la plage entre 40 et 45 °C, est de manière particulièrement préférée de 40 °C.

**8.** Procédé selon l'une quelconque des revendications précédentes, dans lequel directement avant la mise en contact, la température $T_T$ du support (T) poreux inorganique refroidi est, à l'étape b), de 20 °C au maximum, de manière préférée de 15 °C au maximum.

**9.** Procédé selon l'une quelconque des revendications précédentes, dans lequel directement avant la mise en contact, la différence $\Delta T_P$-$T_T$ entre la température $T_P$ de la solution de polymère (P) fabriquée ou fournie dans l'étape a) et la température $T_T$ du support (T) poreux inorganique refroidi est, dans l'étape b), d'au moins 10 °C, de manière préférée d'au moins 15 °C, de manière particulièrement préférée d'au moins 20 °C, de manière très particulièrement préférée d'au moins 30 °C.

**10.** Procédé selon l'une quelconque des revendications précédentes, dans lequel la mise en contact de la solution de polymère (P) fabriquée ou fournie avec un support (T) poreux inorganique refroidi dans l'étape b) comprend les étapes suivantes :

> b1) d'immersion du support (T) poreux inorganique refroidi dans la solution de polymère (P),
> dans lequel de manière préférée l'immersion est mise en œuvre à une vitesse dans la plage de 100 mm/min à 1000 mm/min, de manière particulièrement préférée dans la plage de 250 mm/min à 350 mm/min,
> b2) de séjour du support (T) poreux inorganique dans la solution de polymère (P) pour le laisser agir,
> de manière préférée pendant une durée de 20 s à 100 s, de manière particulièrement préférée pendant une durée de 40 s à 80 s,
> b3) de retrait du support (T) poreux inorganique hors de la solution de polymère (P),
> dans lequel de manière préférée le retrait est mis en œuvre à une vitesse dans la plage de 100 mm/min à 1000 mm/min, de manière particulièrement préférée dans la plage de 250 mm/min à 350 mm/min.

**11.** Procédé selon la revendication 10, dans lequel les étapes d'immersion b1), de séjour b2) pour laisser agir et de retrait b3) sont mises en œuvre respectivement une fois ou plusieurs fois, de manière préférée 1 à 3 fois, de manière particulièrement préférée 1 fois.

**12.** Procédé selon l'une quelconque des revendications précédentes, dans lequel le séchage de la couche de gel polymère sur le support (T) dans l'étape c) comprend au moins les étapes suivantes :

> c1) un premier séchage
>
> à une température, laquelle est inférieure d'au moins 5 °C à la température, à laquelle la solution de polymère (P) commence à se gélifier physiquement,
> et
> pendant une durée de 5 à 15 heures,
>
> c2) un deuxième séchage dans une plage de températures de 80 °C à 160 °C et pendant une durée de 5 à 20 heures.

13. Procédé selon l'une quelconque des revendications précédentes, dans lequel le support (T) poreux inorganique refroidi est humidifié avec un liquide avant la mise en contact avec la solution de polymère (P),

dans lequel de préférence le support (T) poreux inorganique refroidi est humidifié avec un liquide, qui est différent du solvant de la solution de polymère (P) fabriquée ou fournie dans l'étape a),
dans lequel le support (T) poreux inorganique refroidi est humidifié de manière particulièrement préférée avec de l'eau.

14. Procédé selon l'une quelconque des revendications précédentes, dans lequel la couche de séparation sélective appliquée sur le support poreux inorganique est une couche de polymère fermée avec une épaisseur de 20 $\mu$m au maximum, de manière préférée de 10 $\mu$m au maximum, de manière particulièrement préférée de 5 $\mu$m au maximum, de manière très particulièrement préférée de 1 $\mu$m au maximum.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4963165 A
- WO 2009156065 A1
- US 2013287958 A1
- US 2008202262 A1
- US 2021039052 A1
- US 2019002836 A1


**In der Beschreibung aufgeführte Nicht-Patentliteratur**

- **VON BALLHORN.** Entwicklung von Polymermembranen für die Abtrennung von Kohlendioxid aus Gasströmen. *Rheinisch-Westfälische Technische Hochschule Aachen,* 2001
- **VON LOGEMANN et al.** Continuous gas-phase hydroformylation of but-1-ene in a membrane reactor by supported liquidphase (SLP) catalysis. *veröffentlicht in Green Chem.,* 2020, vol. 22, 5691-5700
- **VON PORTELA et al.** Monolithic SiC supports with tailored hierarchical porosity for molecularly selective membranes and supported liquid-phase catalysis. *Catalysis Today,* 01. Januar 2022, vol. 383, 44-54
- **VON ESCORIHUELA et al.** Gas Separation Properties of Polyimide Thin Films on Ceramic Supports for High Temperature Applications. *Membranes,* 2018, vol. 8, 16
- **VON ZHAO et al.** Improved CO2 separation performance of composite membrane with the aids of low-temperature plasma treatment. *Journal of Membrane Science,* 19. Oktober 2018, vol. 570, 184-193
- **VON ESPOSITO et al.** Pebax®/PAN hollow fiber membranes for CO2/CH4 separation. *Chemical Engineering and Processing: Process Intensification,* 18. Marz 2015, vol. 94, 53-61
- Monolithic SiC supports with tailored hierarchical porosity for molecularly selective membranes and supported liquid-phase catalysis. **VON PORTELA et al.** Catalysis Today. In Press, 2020
- **VERGLEICHSDATEN.** *Journal of Membrane Science,* 2008, vol. 307, 88-95